# FASCICULE DE BREVET EUROPEEN

(11) **EP 0 646 751 B1**
(45) Date de publication et mention de la délivrance du brevet: **28.07.1999**
(21) Numéro de dépôt: 94402113.8
(22) Date de dépôt: 22.09.1994
(51) Int. Cl.: F23D 14/22, F23M 5/02, C03B 5/235

(54) **Brûleur et utilisation d'un tel brûleur dans un four de verre**
Brenner und deren Anwendung in einem Glasofen
Burner and use of same in a glass furnace

(30) Priorité: 01.10.1993 FR 9311739
(43) Date de publication de la demande: 05.04.1995
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Laurenceau, Serge, F-78000 Versailles (FR); Philippe, Louis, F-75014 Paris (FR); Iatrides, Jean-Yves, c/o Air Liquide America Corp., Walnut Creek, California 94596 (US); Verlhac, Michel, F-92320 Chatillon (FR)
(74) Mandataire: Le Moenner, Gabriel

(56) Documents cités:
- EP-A- 0 471 956
- US-A- 3 154 134
- US-A- 3 748 087
- US-A- 4 986 748

## Description

La présente invention concerne les brûleurs, en particulier les brûleurs oxycombustibles, du type comprenant un corps de brûleur destiné à être monté sur un bloc-ouvreau en matériau réfractaire définissant une cavité et supportant au moins un tube d'injection interne, voir par exemple le document US 3 748 087 A.

Dans les brûleurs connus de ce type, le corps de brûleur, qui définit habituellement le passage interne d'amenée de gaz oxydant, présente généralement une architecture et une géométrie compliquées réalisées en fonderie et/ou en plusieurs pièces et comprenant le plus souvent des moyens de solidarisation à demeure au bloc-ouvreau.

La présente invention a pour objet de proposer un agencement de brûleur de conception particulièrement simple et légère, intégralement et aisément démontable et permettant de nombreuses adaptations, notamment pour différents combustibles, en conservant un grand nombre de pièces communes aux différentes versions.

Pour ce faire, il est proposé un brûleur ayant les caractéristiques de la revendication 1.

La présente invention concerne également l'utilisation d'un tel brûleur dans un four à verre, le brûleur étant typiquement alimenté par un oxydant gazeux contenant au moins 90 % d'oxygène et avantageusement fourni par une unité de séparation de l'air par adsorption du type dit "VSA".

D'autres caractéristiques et avantages de la présente invention ressortiront de la description suivante de modes de réalisation, faite en relation avec les dessins annexés, sur lesquels :
- la figure 1 est une vue schématique en coupe longitudinale d'un premier mode de réalisation d'un brûleur selon l'invention utilisant comme combustible du gaz naturel ;
- la figure 2 est une vue analogue à la figure 1 d'un deuxième mode de réalisation de l'invention utilisant un combustible liquide pulvérisé ;
- la figure 3 est une vue schématique, analogue à celle de la figure 1, d'un troisième mode de réalisation d'un brûleur selon l'invention ; et
- la figure 4 est une vue en bout du sous-ensemble d'injection de la figure 3.

Comme représenté sur les figures, un brûleur selon l'invention, du type sans refroidissement par circulation d'eau ou d'air, comprend essentiellement un bloc-ouvreau 1 sur lequel est rapporté un corps de brûleur C supportant au moins une canne ou tube d'injection interne 3. Le bloc-ouvreau 1, réalisé en matériau réfractaire, présente une configuration générale parallélépipédique et est destiné à être reçu dans une ouverture traversante 4 d'une paroi 5 d'un four, typiquement un four à verre. Le bloc-ouvreau 1 présente une partie arrière en saillie 6 de dimensions transversales réduites et est entièrement traversé par un passage formant une cavité interne P et comportant une partie amont cylindrique 7 se raccordant à une partie aval 8 à section élargie, cylindrique ou à profil s'évasant vers l'extérieur, par exemple de forme conique, comme représenté, ou à profil partiellement paraboloïdal. Sur la face arrière du bloc 1 sont disposées des cornières en L 9, qui enserrent la partie d'extrémité 6 et sur les faces avant desquelles sont soudées des plaques 10 s'étendant longitudinalement le long des faces du bloc 1 et terminées par des pattes 11 s'étendant transversalement vers l'intérieur et qui sont reçues dans des logements transversaux 12 formés dans la périphérie du bloc-ouvreau 1 et ouvrant vers l'extérieur de ce dernier.

Le corps de brûleur C est constitué essentiellement par un élément tubulaire métallique 2 à configuration générale by-cylindrique comportant une partie d'extrémité aval de plus petit diamètre 13 reçue dans l'extrémité amont de la partie tubulaire amont 7 de la cavité P du bloc-ouvreau, avantageusement dans un logement arrière de diamètre légèrement élargi 14 de cette partie amont 7, de façon à ne pas effectuer de discontinuité entre les diamètres intérieurs de la partie aval 13 de l'élément tubulaire 2 et la partie amont 7 du passage interne dans le bloc-ouvreau. Un tube-raccord 15 est monté latéralement sur la partie d'extrémité arrière de diamètre élargi de l'élément tubulaire 2 pour le raccordement, via des moyens de raccordement rapide, à un circuit en provenance d'une source 50 de mélange gazeux enrichi en oxygène. Sur l'extrémité arrière de l'élément tubulaire 2 est fixée une bride périphérique 16 tandis qu'autour de l'extrémité aval 13 est fixée une collerette périphérique 17. Sur les cornières en L 9 est fixée au moins une, (typiquement trois), ferrure 18 servant au support articulé, autour d'un axe transversal 19, d'un tirant fileté 20 reçu, en position d'assemblage, dans une lumière périphérique radiale 21 de la collerette 17 et permettant, par serrage d'un boulon, le plaquage de cette dernière contre la face arrière du bloc-ouvreau 1 avec interposition d'un matériau d'étanchéité 22, pour assembler ainsi, de façon aisément amovible, le bloc-ouvreau et le corps de brûleur 2.

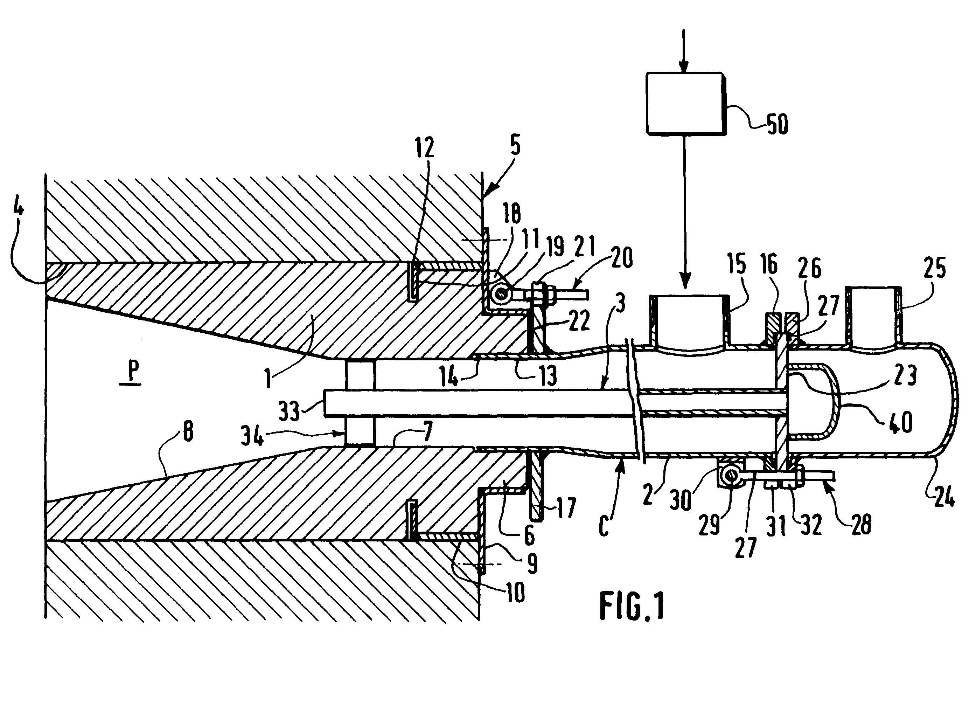

Dans le mode de réalisation de la figure 1, la canne d'injection de combustible 3, coaxiale à l'élément tubulaire 2 et définissant au moins un passage longitudinal traversant, est montée à son extrémité arrière dans une plaque annulaire 23 au travers de laquelle le passage intérieur de la canne d'injection 3 débouche, vers l'arrière, dans une chambre d'alimentation définie par un capotage 24 comportant un tube-raccord 25 de raccordement rapide à un circuit provenant d'une source de combustible gazeux, typiquement du gaz naturel, et dont l'extrémité avant est pourvue d'une bride périphérique 26 symétrique de la bride 16 par rapport à la plaque 23. En position assemblée, la plaque 23 est emprisonnée par sa périphérie, avec interposition de joints d'étanchéité 27, entre les deux brides 16 et 26 dont l'assemblage est assuré, comme au niveau du bloc-ouvreau 1, par au moins un, typiquement trois, tirants 28 montés chacun à pivotement autour d'un axe transversal 29 sur une ferrure 30 fixée extérieurement sur la paroi de l'élément tubulaire 2 et reçus, en configuration de montage, dans des lumières périphériques radiales en vis-à-vis 31 et 32 formées dans les brides 16 et 26, respectivement.

La longueur de la canne d'injection 3 est déterminée de façon que son extrémité aval 33, qui peut être celle de plusieurs tubes injecteurs parallèles adjacents se situe au-delà de l'extrémité de la partie aval 13 du corps du brûleur. Des ailettes 34 s'étendant radialement vers l'extérieur sont montées sur la canne d'injection 3, au voisinage de son extrémité aval, pour coopérer avec la paroi intérieure de la partie amont 7 du passage P et assurer le centrage de la canne 3 dans ce passage P. La plaque 23 de montage du sous-ensemble d'injection interne 3 comporte sur sa face arrière une poignée 40, en forme d'anse ou d'arceau, constituée par exemple par une tige métallique conformée et soudée sur la plaque, permettant une mise en place et une extraction aisées du sous-ensemble individuel 3, même chaud.

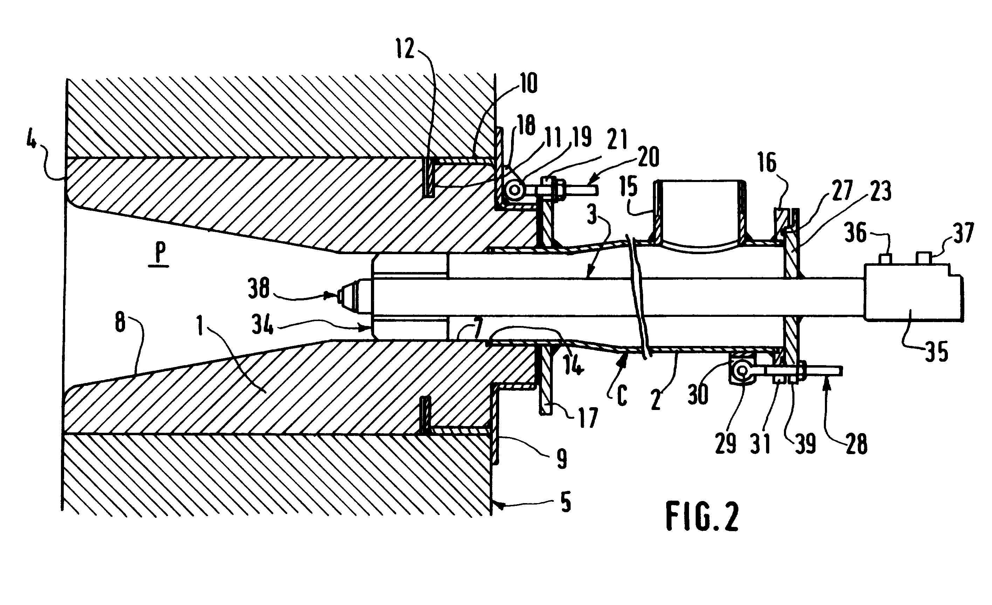

Le mode de réalisation de la figure 2 se distingue du précédent en ce sens que la canne d'injection 3, prévue ici pour l'injection et l'atomisation d'un combustible liquide, par exemple du fioul, se prolonge, vers l'arrière, au travers de la plaque 23, vers un bloc d'extrémité 35 permettant la manutention et comportant des raccords 36 et 37 pour la connection à des sources de vapeur ou d'air et de fioul, respectivement, acheminés par une circuiterie interne à la canne 3 vers un atomiseur amovible monté à l'extrémité aval de la canne 3 et situé sensiblement au niveau de la jonction entre les parties 7 et 8 du passage P. Dans ce mode de réalisation, c'est la plaque 23 qui coopère directement en appui étanche, avec interposition d'un joint 27, avec la bride 16 à l'arrière du corps de brûleur 2, la plaque annulaire 23 étant pourvue ici du logement périphérique radial 39 en regard du logement 31 pour recevoir le tirant 28.

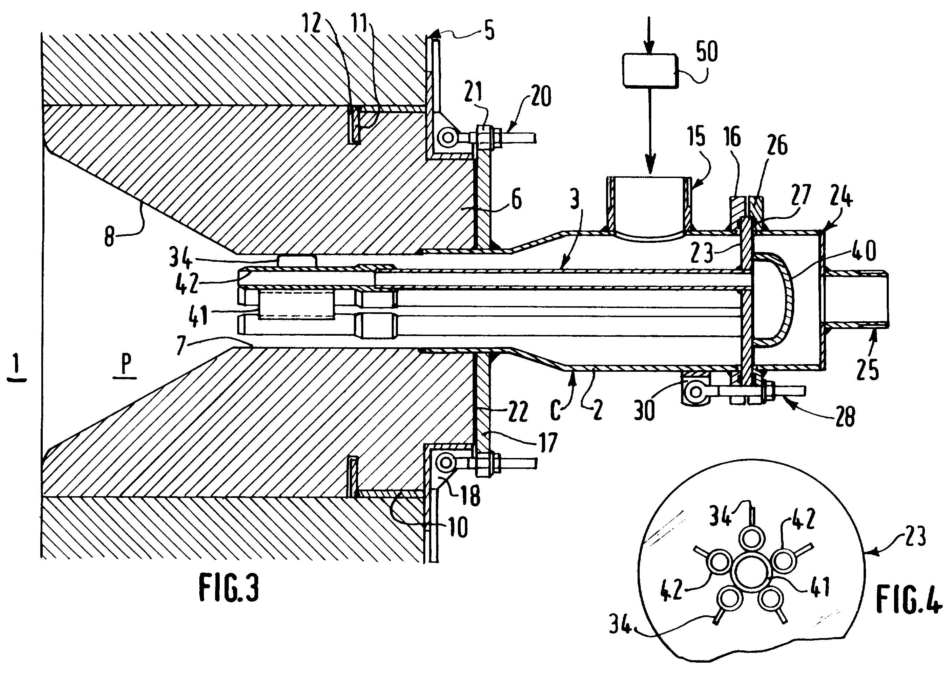

La figure 3 représente un mode de réalisation d'un oxybrûleur brûlant du combustible gazeux analogue à celui de la figure 1 mais où l'ensemble d'injection de combustible 3 comporte, ici, plusieurs tubes parallèles angulairement espacés, montés dans la plaque 23 et dont l'extrémité avant supporte chacune une ailette d'entretoisement et de centrage 34. L'entretoisement et le parallélisme des tubes d'injection 1 sont de plus assurés par une entretoise tubulaire centrale 41 solidarisée aux différentes extrémités des tubes. Comme on le voit bien sur la figure 3, les extrémités avant des tubes d'injection sont, de même que dans le mode de réalisation à tube central de la figure 1, avantageusement, comme les entretoises 34 et 41, constituées par un embout 42 réalisé en métal résistant à la température, par exemple en INCONEL 600 ou en PM 2000. Le montage de la plaque 23 sur le corps de brûleur C est analogue à celui décrit précédemment décrit en relation avec la figure 1.

Comme on l'aura noté de la description qui précède, les choix d'un mode d'éjection de combustible et l'adaptation d'un combustible à un autre ne nécessitent que le changement du sous-ensemble de tube d'injection 3, les autres constituants du brûleur demeurant inchangés. De plus, le montage/démontage du sous-ensemble d'injection vis-à-vis du corps du brûleur et/ou le montage/démontage du corps de brûleur (ou de l'ensemble corps de brûleur/canne d'injection) vis-à-vis du bloc-ouvreau 1 s'effectuent très rapidement et simplement, même par un personnel non qualifié. Enfin, le montage du corps de brûleur sur le bloc-ouvreau par les pattes d'accrochage 12 garantit une fixation durable, exempte de risques d'oxydation et permettant également une récupération et/ou un recyclage de l'ensemble des pièces d'assemblage.

Cette versatilité du brûleur oxycombustible selon l'invention permet de l'adapter à de nombreuses utilisations et en particulier de fonctionner, pour une large gamme de couples combustible/oxydant, à basse impulsion, c'est-à-dire par exemple avec des pressions de gaz oxydant relativement faibles, par exemple de l'ordre de 2500 Pa (relatif), ce qui le rend particulièrement adapté à l'alimentation par de l'oxygène basse pureté (entre 90 et 95 %) fourni sur site par une unité 50 de production d'oxygène par adsorption du type dit PSA ou VSA.

## Revendications

1. Brûleur oxycombustible comprenant un corps de brûleur (C) et un bloc ouvreau en matériau réfractaire (1) définissant une cavité (P) comportant une partie amont cylindrique (7) se raccordant à une partie aval (8) à section élargie, ledit brûleur comportant un élément tubulaire (2) dans lequel est disposé coaxialement un tube d'injection interne (3) pour l'injection de combustible, le gaz comburant étant injecté dans l'élément tubulaire (2), caractérisé en ce que la partie aval (13) de l'élément tubulaire (2) est reçue dans l'extrémité amont de la partie amont (7) du bloc ouvreau (1), en ce que le tube d'injection (3) est solidaire à son extrémité aval de moyens d'entretoisement et de centrage (34), la longeur du tube d'injection (3) étant déterminée de façon que son extrémité aval (33) se situe au delà de l'extrémité de la partie aval (13) de l'élément tubulaire (2), les moyens d'entretoisement et de centrage (34) coopérant avec la paroi intérieure de la partie amont (7) de la cavité (P) et assurant le centrage de la canne (3) dans le passage (P), en ce qu'il comporte des premiers moyens de montage rapide d'une structure porteuse (23) sur l'élément tubulaire (2), cette structure porteuse étant solidaire d'une première extrémité du tube d'injection interne (3) ladite structure porteuse (23) comportant des moyens de manutention du tube d'injection (3), et en ce qu'il comporte un capotage arrière (24) formant chambre d'alimentation du tube d'injection, comprenant des moyens (25) de raccordement à un circuit de fluide et une partie (26) des premiers moyens de montage rapide (28).

2. Brûleur selon la revedication 1 caractérisé en ce que la structure porteuse comporte une plaque (23) traversée par le tube d'injection (3) et destinée à être montée sur une bride annulaire (7) à l'extrémité arrière de l'élément tubulaire (2) du corps de brûleur (C).

3. Brûleur selon l'une des revendications précédentes, caractérisé en ce qu'il comporte au moins deux tubes d'injection parallèles (3).

4. Brûleur selon la revendication 3, caractérisé en ce qu'il comporte des deuxièmes moyens (41) d'entretoisement entre les deuxièmes extrémités des tubes d'injection (3).

5. Brûleur selon l'une des revendications 1 à 4 caractérisé en ce que la deuxième extrémité du tube d'injection (3) est constituée par un embout métallique rapporté (42).

6. Brûleur selon l'une des revendications précédentes, caractérisé en ce qu'il comprend une première armature montée autour de l'élément tubulaire (2), une deuxième armature (9) solidaire du bloc-ouvreau (1), et des deuxièmes moyens (20) de montage rapide entre les premières et deuxième armatures.

7. Brûleur selon la revendication 6, caractérisé en ce que les deuxièmes moyens de montage comprennent au moins un tirant fileté basculant (20).

8. Brûleur selon l'une des revendications précédentes, caractérisé en ce que le tube d'injection (3) fait saillie axialement hors de l'élément tubulaire (2).

9. Utilisation d'un brûleur selon l'une des revendications précédentes dans un four de verre.

10. Utilisation selon la revendication 9, caractérisée en ce que le corps de brûleur (C) est alimenté en un oxydant gazeux contenant au moins 90 d'oxygène.

11. Utilisation selon la revendication 10, caractérisée en ce que l'oxydant gazeux est fourni par une unité de séparation de l'air par adsorption (50).

## Patentansprüche

1. Brenner zur Verbrennung mit Sauerstoff, umfassend einen Brennerkörper (C) und einen Aufwärmblock (1) aus feuerfestem Werkstoff, der einen Hohlraum (P) mit einem vorgeschalteten zylindrischen Teil (7) und einem damit verbundenen nachgeschalteten Teil (8) mit vergrößertem Querschnitt definiert, wobei dieser Brenner ein rohrförmiges Element (2) aufweist, in dem ein inneres Einblasrohr (3) zum Einblasen von Brennstoff coaxial angeordnet ist, wobei das Verbrennungsgas in das rohrförmige Element (2) eingeblasen wird, dadurch gekennzeichnet, daß der nachgeschaltete Teil (13) des rohrförmigen Elements (2) im vorgeschalteten Ende des vorgeschalteten Teils (7) des Aufwärmblocks (1) aufgenommen ist, daß das Einblasrohr (3) an seinem nachgeschalteten Ende mit Verankerungs- und Zentriermitteln (34) einstückig ist, wobei die Länge des Einblasrohrs (3) so bestimmt ist, daß sich sein nachgeschaltetes Ende (33) jenseits des Endes des nachgeschalteten Teils (13) des rohrförmigen Elements (2) befindet, wobei die Verankerungs- und Zentriermittel (34) mit der Innenwand des vorgeschalteten Teils (7) des Hohlraums (P) zusammenwirken und die Zentrierung des Rohrstücks (3) im Durchgang (P) sicherstellen, daß er erste Schnellmontiermittel für eine Trägerkonstruktion (23) auf dem rohrförmigen Element (2) aufweist, wobei diese Trägerkonstruktion mit einem ersten Ende des inneren Einblasrohrs (3) einstückig ist und diese Trägerkonstruktion (23) Mittel zur Handhabung des Einblasrohrs (3) aufweist, und daß er eine hintere Verkleidung (24) besitzt, welche eine Zufuhrkammer für das Einblasrohr bildet und Mittel (25) zum Anschluß an einen Fluidkreislauf und einen Teil (26) der ersten Schnellmontiermittel (28) umfaßt.

2. Brenner nach Anspruch 1, dadurch gekennzeichnet, daß die Trägerkonstruktion eine Platte (23) aufweist, durch welche das Einblasrohr (3) hindurch geht und die dazu bestimmt ist, auf einem ringförmigen Flansch (7) am Hinterende des rohrförmigen Elements (2) des Brennerkörpers (C) montiert zu werden.

3. Brenner nach einem der vorhergehenden Ansprüche, dadurch gekennzeichnet, daß er mindestens 2 parallele Einblasrohre (3) aufweist.

4. Brenner nach Anspruch 3, dadurch gekennzeichnet, daß er zweite Verankerungsmittel (41) zwischen den beiden Enden der Einblasrohre (3) aufweist.

5. Brenner nach einem der Ansprüche 1 bis 4, dadurch gekennzeichnet, daß das zweite Ende des Einblasrohrs (3) aus einem aufgesetzten Metallansatz (42) besteht.

6. Brenner nach einem der vorhergehenden Ansprüche, dadurch gekennzeichnet, daß er einen ersten, um das rohrförmige Element (2) herum montierten Beschlag, einen zweiten, mit dem Aufwärmblock (1) einstückigen Beschlag (9) und zweite Mittel (20) zur Schnellmontierung zwischen den ersten und zweiten Beschlägen umfaßt.

7. Brenner nach Anspruch 6, dadurch gekennzeichnet, daß die zweiten Montiermittel mindestens eine Kippstange mit Außengewinde (20) umfassen.

8. Brenner nach einem der vorhergehenden Ansprüche, dadurch gekennzeichnet, daß das Einblasrohr (3) axial aus dem rohrförmigen Element (2) vorsteht.

9. Verwendung eines Brenners nach einem der vorhergehenden Ansprüche in einem Glasofen.

10. Verwendung nach Anspruch 9, dadurch gekennzeichnet, daß dem Brennerkörper (C) ein gasförmiges, mindestens 90% Sauerstoff enthaltendes Oxydationsmittel zugeführt wird.

11. Verwendung nach Anspruch 10, dadurch gekennzeichnet, daß das gasförmige Oxydationsmittel von einer Luftzerlegungseinheit durch Adsorption (50) geliefert wird.

## Claims

1. Oxyfuel burner comprising a burner body (C) and a tap-hole block (1) made of refractory material defining a cavity (P) having a cylindrical upstream portion (7) which is connected to a downstream portion (8) of enlarged cross section, the said burner comprising a tubular element (2) in which an internal injection pipe (3) for injecting fuel is placed coaxially, the oxidant gas being injected into the tubular element (2), characterized in that the downstream portion (13) of the tubular element (2) is housed in the upstream end of the upstream portion (7) of the tap-hole block (1), in that the injection tube (3) is fastened at its downstream end to bracing and centring means (34), the length of the injection pipe (3) being defined so that its downstream end (33) lies beyond the end of the downstream portion (13) of the tubular element (2), the bracing and centring means (34) engaging with the inner wall of the upstream portion (7) of the cavity (P) and ensuring that the pipe (3) is centred in the passage (P), in that it includes first means for quickly mounting a supporting structure (23) on the tubular element (2), this supporting structure being fastened to a first end of the internal injection pipe (3), the said supporting structure (23) including means for handling the injection pipe (3) and in that it includes a rear cap (24) forming a feed chamber for the injection pipe, comprising means (25) for connection to a fluid circuit and a portion (26) of the first quick mounting means (28).

2. Burner according to Claim 1, characterized in that the supporting structure includes a plate (23) which is penetrated by the injection pipe (3) and is intended to be mounted on an annular flange (7) at the rear end of the tubular element (2) of the burner body (C).

3. Burner according to one of the preceding claims, characterized in that it includes at least two parallel injection pipes (3).

4. Burner according to Claim (3), characterized in that it includes second spacing means (41) between the second ends of the injection pipes (3).

5. Burner according to one of Claims 1 to 4, characterized in that the second end of the injection pipe (3) consists of an attached metal nozzle (42).

6. Burner according to one of the preceding claims, characterized in that it comprises a first reinforcement mounted around the tubular element (2), a second reinforcement (9) fastened to the tap-hole block (1), and second quick mounting means (20) between the first and second reinforcements.

7. Burner according to Claim 6, characterized in that the second mounting means comprise at least one swinging threaded tie rod (20).

8. Burner according to one of the preceding claims, characterized in that the injection pipe (3) projects axially from the tubular element (2).

9. Use of a burner according to one of the preceding claims in a glass furnace.

10. Use according to Claim 9, characterized in that the burner body (C) is fed with a gaseous oxidant containing at least 90 % of oxygen.

11. Use according to Claim 10, characterized in that the gaseous oxidant is provided by an air separation unit (50) operating by adsorption.
